# EUROPEAN PATENT APPLICATION

(11) **EP 2 998 811 A1**
(43) Date of publication of application: **23.03.2016**
(21) Application number: 15183847.1
(22) Date of filing: 04.09.2015
(51) Int. Cl.: G05B 19/42

(54) **A HUMAN-MACHINE INTERFACE ADAPTED TO BE ASSOCIATED TO AN APPARATUS FOR WORKING PIECES, HAVING AN INSTRUMENT FOR PIECE DETECTION, FOR AUTOMATICALLY PROGRAMMING A PIECE WORKING CYCLE**

(30) Priority: 08.09.2014 IT TO20140702
(71) Applicant: Biesse S.p.A., 61122 Chiusa di Ginestreto (Pesaro Urbino) (IT)
(72) Inventor: ANGELOTTI, Franco, I-61122 Chiusa di Ginestreto (Pesaro Urbino) (IT)
(74) Representative: Notaro, Giancarlo

(57) **Abstract**

An electronic-control apparatus (1) for machining workpieces, for example plates of natural or synthetic stone material, or plates of glass, or pieces of wooden material, comprises an operating head (8) movable above a working surface (3). The apparatus comprises an electronic control unit (E) programmable for moving the operating head (8) in such a way as to follow pre-determined paths, according to a pre-determined cycle, for machining a workpiece (L) positioned on the working surface (3). The apparatus further comprises a human-machine interface (HMI) for programming the electronic control unit. The human-machine interface (HMI) includes an instrument (12, 13; 15) for detecting information on the shape and dimensions of the workpiece (L). This instrument is associated to an electronic processing unit (14) adapted to process the information at output from the aforesaid detection instrument (12, 13; 15) and to transmit input data to the aforesaid electronic control unit (E), for automatic generation of a program for implementing the machining cycle.

## Description

### Field of the invention

The present invention relates to electronic-control apparatuses for machining workpieces. Preferred examples of application of the invention are represented by numeric-control machines for machining plates of stone material, or plates of glass, or pieces or panels of wooden material, with the use of cutting and/or machining tools of any kind, also including, for example, machining heads of the water-jet type.

The invention may, however, be applied in general to any apparatus for machining workpieces that includes an operating head movable with respect to a working surface and an electronic control unit programmable for moving the operating head in such a way as to follow pre-determined paths, according to a pre-set cycle, in order to machine a workpiece positioned on the working surface,

### Prior art and technical problem

Apparatuses of the type indicated above are, for example, described in the documents Nos. IT-B-1 376 236, IT-B-1 391 863, EP 1 591 427 A1, EP 1 779 970 A1, and EP 1 894 897 A2, filed in the name of the present applicant. These documents describe multi-purpose workcentres that the present applicant has produced and marketed successfully for some time. These workcentres have encountered increasing favour among operators of the sector, thanks to their characteristics of high productivity, high flexibility of use, and high quality and machining precision. These advantages are, however, not yet available to operators working in small-sized or small- to medium-sized firms, who do not have experience with CAD (Computer-Aided Design) and hence are not able to prepare the electronic file with the data that are to be used by the electronic control unit of the workcentre in order to implement the machining cycle.

It would consequently be desirable to provide a workcentre of the type referred to above, which, albeit preserving all the advantages just mentioned, could prove usable also by staff that is not skilled in CAD and that in particular would enable operators that are accustomed to using more conventional machines not to modify their working method.

Furthermore, irrespective of the level of expertise of the operator, there is in any case in general felt the need to simplify and shorten the step of programming of the machine in order to pre-set it for executing a given machining cycle.

### Object of the invention

The object of the present invention is consequently to overcome the aforesaid drawbacks, eliminating the need to implement an electronic CAD file as input datum for the electronic control unit of the machine, enabling the operator to pre-set the machine for execution of a given operating cycle through extremely simple and intuitive operations, and preferably without modifying the working method that is traditionally followed in the use of more conventional machines.

### Summary of the invention

With a view to achieving the aforesaid purpose, the object of the present invention is a human-machine interface (HMI) adapted to be associated to an apparatus for machining workpieces, including an operating head movable with respect to a working surface and an electronic control unit programmable for moving the operating head in such a way as to follow pre-determined paths, according to a pre-determined cycle, in order to machine a workpiece positioned on the working surface, the human-machine interface being characterized in that it includes:
- an instrument for detecting information on the shape and dimensions of the piece to be machined and/or of the finished piece to be obtained; and
- an electronic processing unit adapted to process the information at output from said detection instrument and to transmit input data to said electronic control unit, for automatic generation of a program for implementing the machining cycle.

The object of the invention is also the apparatus associated to the aforesaid human-machine interface, according to what is specified in Claim 2, as well as the method of use of said interface, according to what is specified in Claim 23.

Thanks to the present invention, the operator who wishes to pre-set the machining apparatus for carrying out a predetermined operating cycle simply has to detect the shape and dimensions of the piece to be machined with the aid of the aforesaid detection instrument, after which it is the electronic processing unit of the HMI that carries out automatic generation of an electronic file to be used as input datum in the electronic control of the apparatus. The step of CAD of the workpiece to be produced is thus eliminated completely or almost completely.

In a first embodiment of the invention, the aforesaid detection instrument comprises a detection tool adapted for being used manually above the workpiece, or above a template of the workpiece, or on a drawing of the workpiece. For instance, the tool is a feeler tool that can be manually displaced along edges of the workpiece or of a template representing the workpiece, or along lines of a drawing of the workpiece, the feeler tool being associated to means for detecting the position of the tool, which are adapted to send to said electronic processing unit an electrical signal containing information on the shape and dimensions of the piece to be machined. An instrument of this type is, for example, described and illustrated in the document No. EP 2 636 987 A1.

The advantage of the above specific embodiment lies in the fact that the operator uses the feeler tool manually, displacing it along the edge of the piece to be machined, or along a template thereof, or above a drawing of the workpiece. This operation is in itself similar to the operation currently performed by operators who use more conventional machines, for example, for machining plates of stone or plates of glass, or pieces of wooden material, where the piece to be machined is marked manually by the operator with marks used as trace for carrying out subsequent machining.

In the case of the aforesaid first embodiment of the invention, the operator who uses the feeler tool along the edges of the workpiece and/or above the workpiece (for example, for marking the position of drilling to be made in a plate) has the sensation of "drawing on the workpiece" in a way similar to what he does when using more traditional machines and does not have to carry out any CAD operation in order to instruct the electronic control unit of the apparatus. The same applies in the case where the operator uses a template or a drawing of the workpiece.

In one variant, the aforesaid detection instrument comprises an opto-electronic tool, adapted to detect an image of the workpiece or of a template representing the workpiece, or of a drawing of the workpiece, and to send to said electronic processing unit an electrical signal containing information on the shape and dimensions of the workpiece.

According to a further preferred characteristic of the present invention, the aforesaid human-machine interface of the apparatus according to the invention further comprises a terminal, which communicates with the electronic unit for processing the data acquired by the detection instrument and is adapted for supplying to the electronic control unit additional information on the operating cycle to be executed. In the case where the workpiece is a plate, this additional information may, for example, include the desired sectional profile for the edge of the finished plate, which can be selected, for one or more sides of the plate, or for parts of said sides, from a plurality of predetermined profiles. Furthermore, this additional information may include, for example, the shape of the area of transition between two contiguous sides of the plate, the value of the thickness of material to be removed along the perimeter of the plate, or any other parameter of interest.

Preferably, the processing unit is adapted for displaying on the aforesaid terminal a drawing of the workpiece, as detected by the detection instrument.

Once again preferably, the aforesaid terminal is a portable computer, for example in the form of a palm-top or tablet. This computer may be provided with a plurality of applications (for example, of the type that can be implemented in touch mode by simple touching and swiping on the display) in order to facilitate correction and/or integration by the operator of the information on the shape and dimensions of the workpiece that the electronic control unit of the workcentre uses as input data for implementing the operating cycle of the workpiece.

In the case of the first embodiment mentioned above, which makes use of a manual tool, there may also be provided means for displaying the path followed by the feeler tool directly on the template of the workpiece, during movement of the tool.

The detection instrument with which the apparatus according to the invention is provided can be adapted for being used with the workpiece, or with a template thereof, or a drawing of the workpiece, positioned on the working surface of the apparatus. Alternatively, the detection instrument can be pre-set for being used with the workpiece, or a template, or a drawing of the workpiece, positioned on an auxiliary working surface, set at a distance from the working surface of the apparatus.

Further characteristics of the invention are specified in the annexed claims, which form an integral part of the present description.

### Brief description of the drawings

The invention will now be described with reference to the annexed drawings, which are provided purely by way of non-limiting example and in which:
- Figure 1 is a perspective view of a workcentre for machining plates of stone material or of glass, according to the known art;
- Figure 2 is a perspective view of a first embodiment of the workcentre according to the invention;
- Figure 2A is a block diagram of the structure of the electronic control system of the apparatus according to the invention;
- Figure 3 is a schematic perspective view of a portable computer of the tablet type that forms part of the equipment of the workcentre according to the preferred embodiment of the invention;
- Figure 4 is a perspective view of a further embodiment of the workcentre according to the invention;
- Figure 5 illustrates a further embodiment of the apparatus according to the invention; and
- Figures 6-15 show examples of plates of stone material that can be machined using the workcentre according to the invention.

### Detailed description of some preferred embodiments

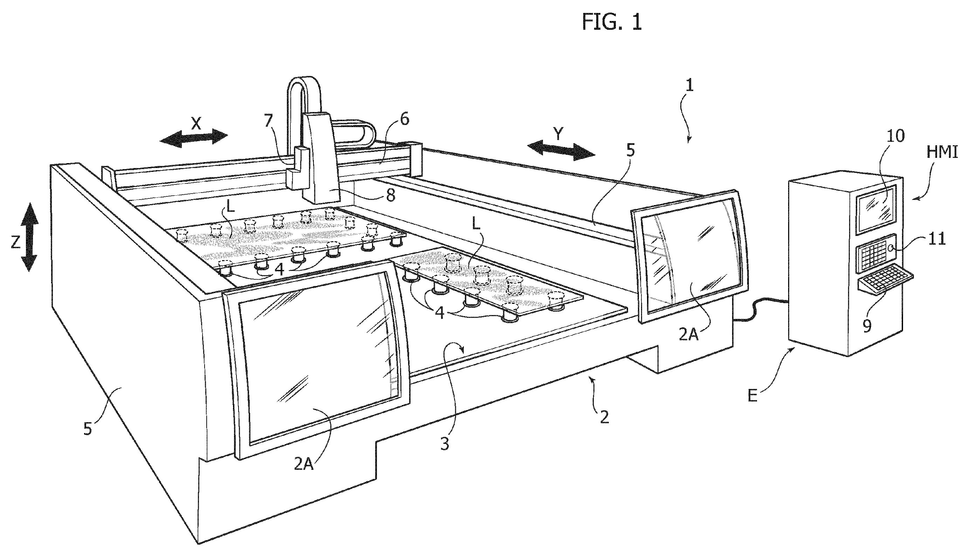

Figure 1 is a schematic perspective view of a workcentre for machining plates of natural or synthetic stone material, such as for example stone or marble, or for machining plates of glass.

It should be noted that the workcentre illustrated herein constitutes just one example of apparatus made according to the present invention. As already mentioned, the invention may in fact be applied in general to any electronic control machine for machining plates of stone material, glass, wooden material, or also plastic material or metal material, by using cutting and/or machining tools of any kind, including, for example, machining heads of the water-jet type.

The workcentre 1 comprises a supporting structure 2 defining a working surface 3, on which the plates L to be machined are positioned. According to a technique in itself known, the plates L are blocked in the working position by means of a plurality of suction-cup blocking units 4, each of which is connected by means of an independent hose (not illustrated) to a negative-pressure source. Each blocking unit 4 is provided with a bottom suction-cup device and a top suction-cup device, which can be activated separately, respectively for blocking the blocking unit on the working surface 3 and for blocking the plate L on the blocking unit. The blocking units 4 are positioned on the working surface 3, according to the conformation of the plate L to be machined and the position on the working surface 3 in which the plate is to be set. In addition to the blocking units 4, also referencing units are provided for precise positioning of the plates, which include arrest members that can be engaged by the edges of the plates. All the aforesaid constructional details may be obtained in any known way and do not fall, taken in themselves, within the scope of the invention. Purely by way of example, the blocking units 4 and the units for referencing the plates in position could also be made in compliance with the teachings of the documents Nos. EP 2 682 226 A1 and EP 2 682 227 A1, filed in the name of the present applicant, where it is envisaged that each unit is provided with an independent source of negative pressure.

The structure of the workcentre 1 comprises two fixed side walls 5, at the two sides of the working surface 3, slidably mounted above which is an overhead travelling crane 6. In Figure 1, the longitudinal direction of the overhead travelling crane 6 is designated by X and the direction of movement of the overhead travelling crane 6, orthogonal to the direction X, is designated by Y. Mounted on the cross member 6 so that it slides in the direction X is a carriage 7, which in turn supports an operating head 8 vertically movable in the direction Z. According to a technique in itself known, the operating head 8 includes a spindle (not illustrated) controlled by a respective electric motor that drives in rotation a tool for machining the plate.

Figure 1 does not show the constructional details of all the elements described above in so far as the latter can be built in any known way and do not fall, taken in themselves, within the scope of the present invention. Once again according to a technique in itself known, the spindle is provided with a tool-change device that enables automatic change of the tool associated to the operating head 8. For this purpose, the workcentre preferably includes a tool magazine (not visible in Figure 1), to which the operating head 8 is brought whenever automatic change of the tool is to be carried out. The electric motor for driving the spindle that carries the tool into the operating head 8, as well as the electric motors for driving vertical movement along Z of the operating head 8, horizontal movement along X of the carriage 7 on the overhead travelling crane 6, and horizontal movement along Y of the overhead travelling crane 6 above the side walls 5 of the workcentre, are controlled by an electronic control unit E, which is programmed according to a predetermined operating cycle, in order to carry out machining of the plate. This operation may consist, for example, in machining the edge of the plate in order to bestow on this edge a section having a desired profile by removing a predetermined thickness of material with respect to the semifinished plate that was initially positioned in the workcentre. Machining may moreover include execution of operations of cutting of the plate, for example, for bestowing on a side of the plate a predetermined shape, or else for making one or more openings within the plate (as is, for example, necessary in the case of top surfaces for kitchen furniture or for bathrooms that are to be provided with openings in a position corresponding to the basin). Machining of the plate may moreover comprise carrying out operations of drilling (as, for example, in the case of gravestones that need to have holes for fixing accessory elements or elements of letters and numbers on the gravestone).

The operating area of the machine may be isolated completely by closing two front sliding barriers 2A.

The electronic control unit E is provided, as in any conventional machine tool, with a human-machine interface (HMI) including, for example, a keyboard 9, a display 10, and further operating buttons, amongst which, for example, an emergency arrest button 11.

As already mentioned above, the workcentres of a known type described above present the advantage of carrying out machining of the plates L in a completely automatic way, with a high through-put and the capacity for adapting in a flexible way to different machining requirements. Workcentres of this type, however, still encounter difficulties in spreading to the sector of small-sized and medium-sized firms, where there are not available operators who are able to set up the electronic CAD files that are to be loaded into the electronic control system of the machine for generating the program that implements the desired operating cycle in the machine.

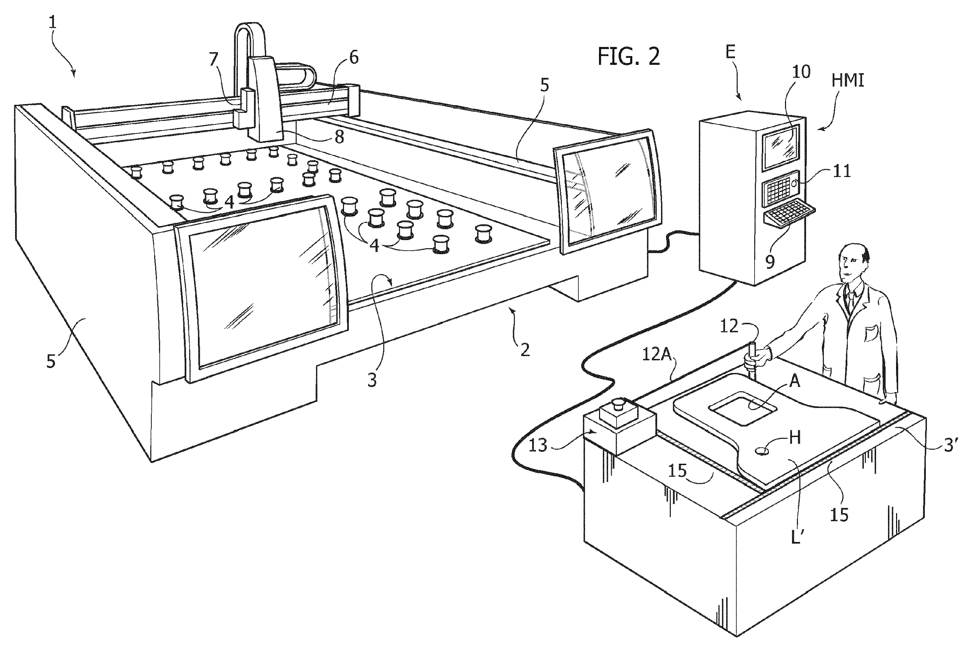

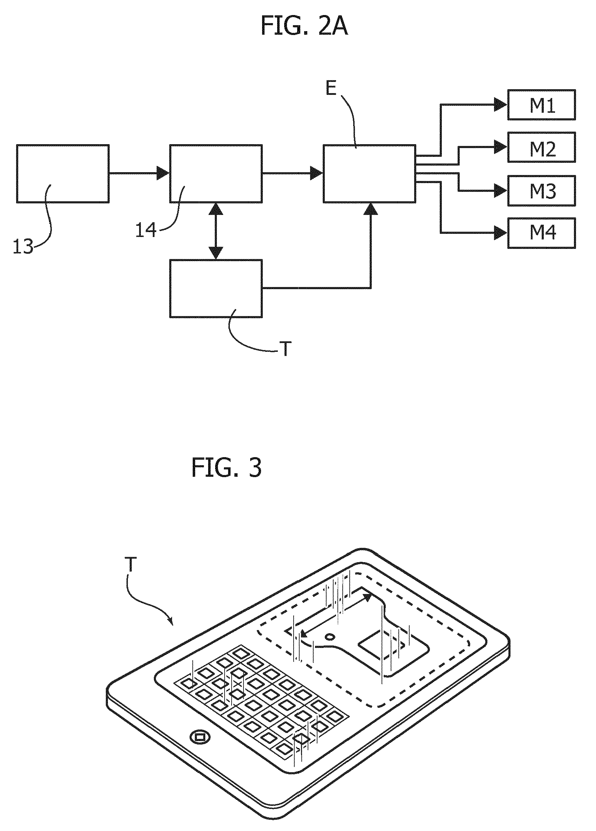

Figure 2 is a schematic illustration of a first example of embodiment of a workcentre according to the invention, where the human-machine interface also includes an instrument for detecting information on the shape and dimensions of the plate, and an electronic processing unit, adapted to process the information at output from the detection instrument and to transmit input data to the aforesaid electronic control unit for automatic generation of a program for implementing the machining cycle.

In the example of Figure 2, the detection instrument comprises a manual tool, specifically a feeler tool 12, in the form of a stylus, which can be manually displaced along the perimeter of a plate to be machined, or along the edges of a template representing the finished plate to be obtained, or along the lines of a drawing of the plate. The feeler tool 12 is associated to a unit 13 for detecting the position of the tool 12, which is adapted to send to an electronic processing unit 14 (see Figure 2A) an electrical signal containing information on the shape and dimensions of the plate to be machined.

In the case of the example illustrated in Figure 2, the device, including the feeler tool 12 and the detection unit 13, may be made, for example, in compliance with the teachings of the document No. EP 2 636 987 A1. This device comprises a cable that can be unwound 12A for connection between the tool 12 and the detection unit 13, and the latter is provided with means for detecting the degree of extension of the cable and its angle of inclination with respect to a fixed reference.

Figure 2 shows an example of embodiment, where the detection tool 12 is used for detecting the position, shape, and dimensions of a template L' of the finished plate to be obtained, positioned on an auxiliary working surface 3' set adjacent to the workcentre. Preferably, the auxiliary surface 3' is provided with referencing means 15 of any type for referencing in position the plate L, or a template thereof, on the auxiliary working surface 3'. In the example, there are moreover envisaged two reference slats 15, orthogonal to one another, which constitute a reference of the position of the template L' on the surface 3'. Of course, any other type of reference may be used, including the use of one and the same tool 12 for detecting the position of predetermined points of the template L' with respect to the stationary unit 13.

Use of a template L' enables providing the template also with possible openings A that are to be formed in the plate L. Furthermore, the template L' may be provided with holes or marks H indicating the positions where drilling is to be carried out. According to the invention, there is envisaged also the possibility of carrying out the operation of detection with the aid of the tool 12 on a drawing of the plate to be machined L, positioned above the surface 3'.

Figure 2A is a block diagram of the system according to the invention. The detection unit 13 transmits signals containing information on the shape and dimensions of the plate L, including the position and configuration of possible openings A or holes H, to an electronic processing unit 14. The electronic processing unit 14 carries out automatically the processing necessary to send to the electronic control unit E of the workcentre input data required for automatic generation of a program for implementing the machining cycle, on the basis of which the electronic control unit drives the electric actuators M1, M2, M3, M4 of the workcentre, including the electric motors M1, M2, M3 for driving movement of the cross member 6 along Y, of the carriage 7 along X, and of the operating head 8 along Z, and the electric motor M4 for driving of the spindle that carries the machining tool.

As has been seen, in the case of the workcentre according to the invention the need for any operation of design of a CAD type is eliminated, and the human-machine interface of the workcentre is provided with an instrument that enables the operator to obtain automatic generation of the program for implementing the machining cycle. In the case of the embodiment of Figure 2, the manual instrument 12 provides the operator with the sensation of actually "drawing on the workpiece", in a way similar to the traditional procedure followed in the use of more conventional machines.

In this way, the workcentre according to the invention is suited to being used easily also in small-sized and medium-sized firms, where the operators are not skilled in the use of design instruments of a CAD type with the aid of a computer but are, instead, accustomed to tracing by hand on the piece to be machined the lines along which the workpiece is to be machined. In other words, thanks to the fact of being equipped with an instrument for detecting the workpiece and with an electronic processing unit associated thereto, the workcentre according to the invention is able to operate in a altogether automatic way according to the most advanced technologies, without, however, requiring any modification of the mode of operating on the part of users of more traditional machines, for which a capacity for using CAD tools is not required.

With reference once again to Figure 2A, according to a further preferred characteristic of the invention, the human-machine interface HMI of the workcentre according to the invention further comprises a terminal T, which communicates with the processing unit 14 and is adapted for supplying to the electronic control unit E additional information on the operating cycle to be carried out. The terminal T may be integrated in the unit 13 and may be provided with a display carried by said unit. However, preferably it also (or only) comprises a portable computer, for example of the palm-top or tablet type, as illustrated schematically in Figure 3.

The portable computer T is used, for example, for selecting the desired cross-sectional profile for the edge of the finished plate, even separately for each side of the plate, by selecting from a plurality of predetermined profiles. The portable computer T may also be used, for example, for providing indications on the desired shape of the area of transition between two contiguous sides of the plate and/or for indicating a value of the thickness of material to be removed along the perimeter of the plate.

Preferably, as illustrated schematically in Figure 3, the portable computer T is adapted for displaying a drawing of the plate as detected by the detection instrument 12.

The portable computer T can also be used for correcting the information obtained via the detection instrument. For instance, the computer T can be used for indicating a variation of scale in the case where the detection instrument 12 is used on a template that reproduces the plate to be machined at a reduced scale. Furthermore, the portable computer T can be used for correcting the shape and dimensions of the drawing as displayed on the portable computer T, following upon the detection operation carried out, for example, on a template or on a drawing of the plate.

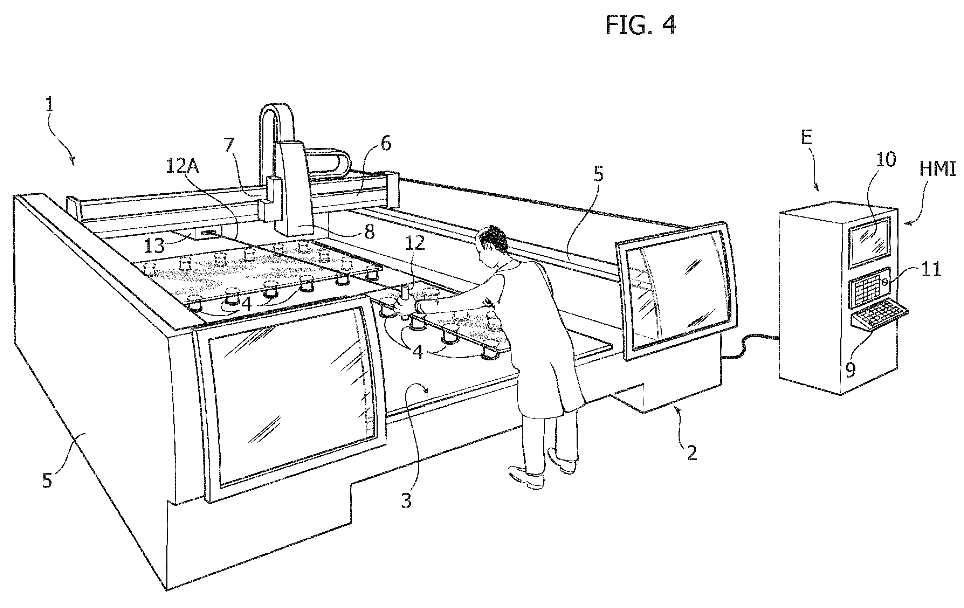

Figure 4 of the annexed drawings shows a variant where the detection instrument 12, with the associated detection unit 13, is directly mounted on the workcentre, for example underneath the overhead travelling crane 6, in order to enable the operation of detection to be carried out after the plate to be machined has been positioned directly on the working surface 3.

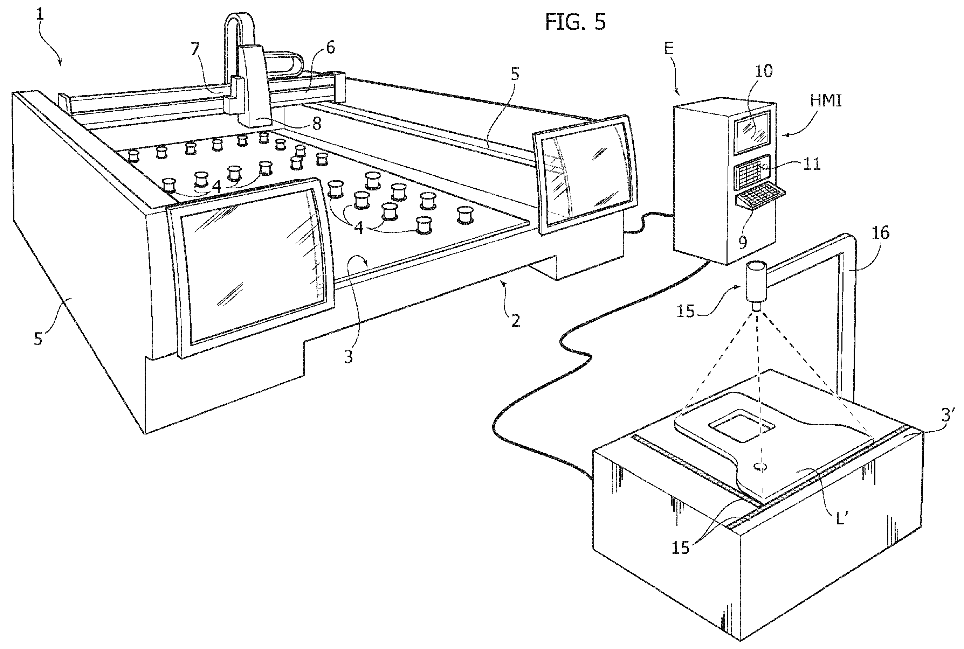

Figure 5 illustrates a further embodiment, in which, instead of the feeler tool 12 with the associated detection unit 13, an opto-electronic instrument 15 is used, held by a supporting structure 16 (preferably in an adjustable position) above the auxiliary surface 3' so as to be able to generate an electrical signal indicating the position, shape, and dimensions of a plate, or of a template of the plate, or of a drawing of the plate positioned on the auxiliary surface 3'. Not ruled out either is the possibility of associating the opto-electronic instrument 15 directly to the structure of the workcentre in order to carry out the operation of detection of the workpiece directly on the working surface 3.

The opto-electronic instrument 15 makes it possible to avoid the manual operation of detection of the plate that is envisaged in the case of the embodiment of Figures 2 and 4.

Of course, it is evident from the foregoing that the most important characteristic of the present invention lies in the fact that the workcentre is integrated with a detection instrument adapted to obtain information on the shape and dimensions of the plate and consequently to enable automatic generation of the program for implementing the cycle of machining of the plate, avoiding steps of CAD electronic processing.

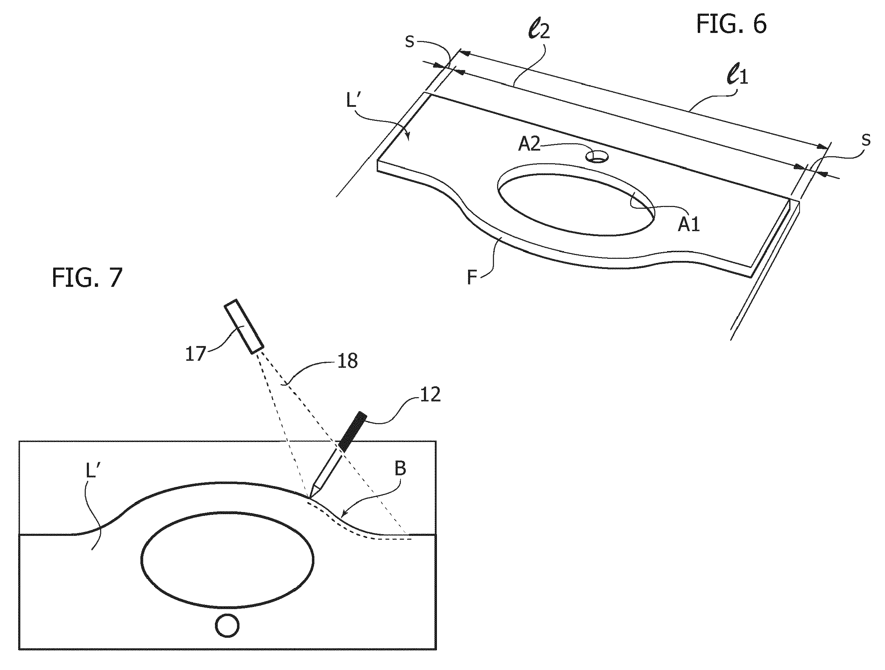

Figure 6 shows an example of a template L' used for detecting the shape and dimensions of the top surface of a basin for a bathroom cabinet, which can be obtained starting from a rough plate L by removing a thickness s of material, making openings A1, A2 for the basin and for the tap assembly, and configuring the front edge according to a patterned profile F.

With reference to the above example, the method according to the invention, which is necessary for obtaining the finished plate, envisages the following steps.

First step A semi-finished plate L is provided by a cutting operation carried out on a plate of larger size, in a conventional machine of any type (for example a bridge cutter).

Second step The operator places the semi-finished plate L on the working surface 3 of the workcentre or on a working surface 3', as illustrated in Figure 2.

Third step The operator carries out the manual operation of detection of the semi-finished plate L, by means of an instrument 12, 13 of the type illustrated in Figure 2. During execution of this operation, the operator may monitor the path displayed on a screen of the unit 13 and/or for example on the display of the portable computer T (Figure 3).

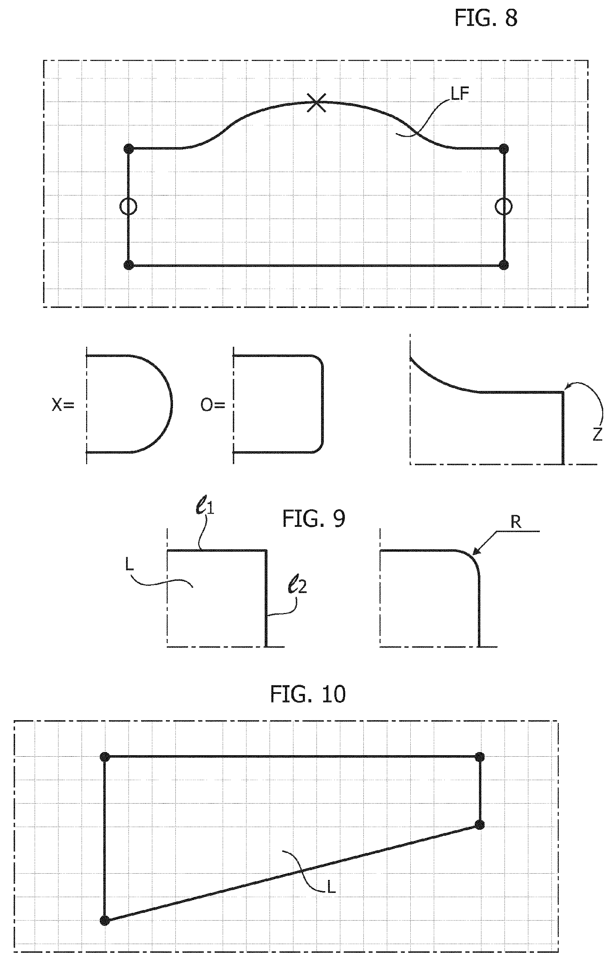

Fourth step This step, which may be simultaneous with the third step, envisages that the operator will select, for example by using the portable computer T, the desired profile for each side of the plate. This is illustrated by way of example in Figure 8, which shows the display of the plate as appearing on the screen of the portable computer T. On the drawing displayed, each side is associated to a corresponding shape of the profile of the edge of the plate. Furthermore, as is also visible in Figure 8, in this step the operator may select the shape to be given to the areas Z of transition between two contiguous sides of the plate. In this fourth step, the operator may moreover use the portable computer T for correcting the drawing obtained and/or for adding any further information that may be necessary, such as, for example, the value of the thickness S of material that is to be removed and/or the position and diameter of possible holes to be made in the plate.

Fifth step In the case where the operation of detection of the workpiece has been carried out directly on the working surface 3 of the workcentre, the operator at this point issues an end signal to the portable computer T to inform the control electronics of the machine that the operation of detection of the workpiece is through. In the case where the operation of detection of the workpiece has been carried out on an auxiliary surface 3' adjacent to the workcentre, the operator must of course first of all transfer the workpiece onto the surface 3 of the workcentre.

As already mentioned above, the detection operation may also be made on a drawing of the plate or directly on the rough plate.

The portable computer T may be used for imparting further additional instructions, such as, for example, a scale to be applied in the transfer from the template to the real workpiece (in the case where the template is a reproduction in scale of the plate to be machined) and/or any further information that may be necessary.

When the aforesaid operations are through, the electronic processing unit 14 generates input data for the electronic control unit E, on the basis of which the program for implementing the machining cycle is automatically created.

Figure 7 shows a variant where associated to the detection instrument 12 is a laser lighting head 17, which lights up the stretch B of the edge of a template L' where the tool 12 has already passed, so as to give the operator the sensation of drawing a line on the workpiece. This result can be obtained by means of an electronic unit for control of the direction of the laser beam 18 that takes into account the position and movement of the feeler tool 12.

Figure 9 shows an example of drawing that appears on the display of the portable computer T, where two contiguous sides I₁ and I₂ of the plate L are shown (see drawing on the left in Figure 9). The operator can impart, via the portable computer T, an instruction regarding the radius R to be assigned to a radiusing to be obtained on the edge defined between the two sides I₁, I₂ (see the right-hand part of Figure 9).

The aforesaid example regards one of the possible corrections that the operator can make to the drawing of the workpiece after he has carried out the operation of detection using the tool 12. The portable computer T may be equipped with an elementary-level CAD tool for assisting the operator in correcting and completing the drawing obtained via the operation of detection on the workpiece.

Figure 10 regards the case where the detection operation is carried out on a drawing of the plate, instead of on the plate itself or on a template thereof. It may be envisaged that the drawing to be detected is only a sketch, it being possible for the operator, once the drawing has been displayed on the portable computer T, to enter the desired dimensions for the sides of the plate L and for the angles formed between each pair of contiguous sides.

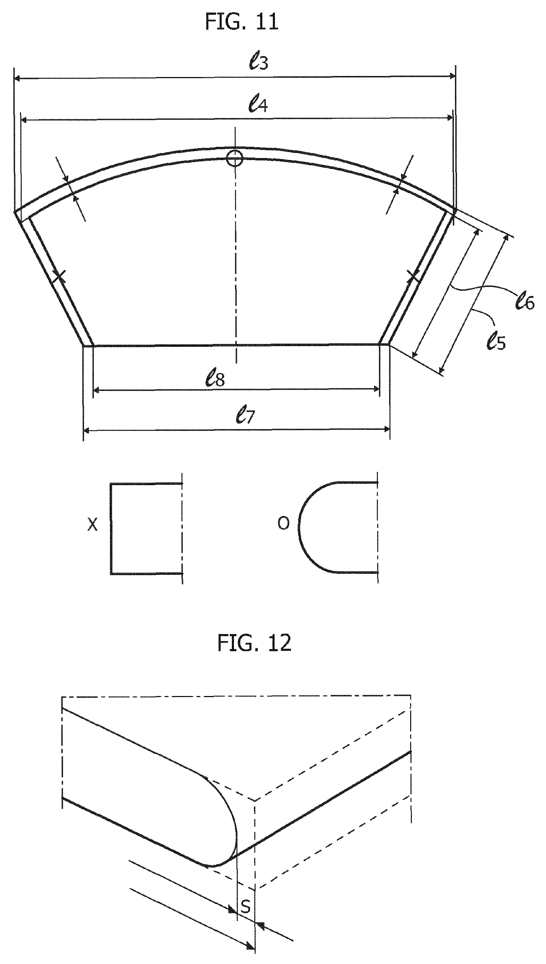

Figure 11 illustrates a further example of plate as displayed on the screen of the computer T. Also in this case, the operator can use the portable computer T for assigning a desired cross-sectional profile (see the bottom part of Figure 11) to each side of the plate to be machined. The operator may moreover assign a value to the thickness of material to be removed and/or indicate the desired dimensions for each side of the plate. As may be seen in Figure 11, there may be envisaged display both of the dimensions I₃, I₅, I₇ of the semi-finished plate and of the dimensions I₄, I₆, I₈ of the finished plate.

It may also be envisaged to assign, via the portable computer T, a line of symmetry, and to reproduce specularly a first half of the plate detected using the instrument 12, 13 on the other side of the axis of symmetry.

Figure 12 illustrates, once again in perspective view, the detail of an edge of the plate. This type of display may, for example, be adopted in the portable computer T in order to enable the operator to select the desired type of profile for the edge of the plate and the value of the thickness of material to be removed.

After the operator has defined the value of the thickness of material to be removed on each side of the plate, the electronic processing unit 14 can generate automatically the joining lines between the vertices of the plate.

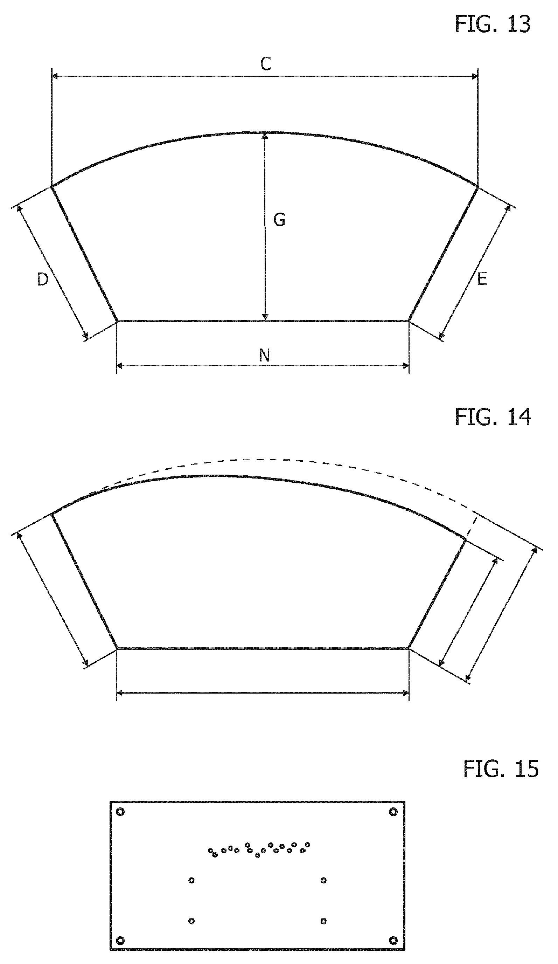

Figure 13 regards the case where displayed on the portable computer T is a drawing following upon a manual operation of detection carried out by the operator directly on a sketched drawing of the plate. In this case, displayed on the portable computer are the various dimensions C, D, E, G, N of the plate, and the operator has the possibility of entering the desired and possibly correct dimensions for each. The operator also has the possibility of adding indications additional to the ones displayed initially. As already mentioned above, with the aid of the portable computer, the operator can moreover select the desired profile for each side of the plate. In a variant, the portable computer already displays the values of the dimensions as detected on the workpiece or on a template or on a drawing, and provides the operator with the possibility of modifying them.

Finally, it may also be envisaged that the detection instrument is constituted by the computer T itself, which detects a drawing sketched by the operator on the display of the computer, with the aid of elementary CAD tools.

According to an alternative modality (illustrated in Figure 14), the image displayed on the portable computer T may be modified by means of a "touch" procedure by touching the display at a vertex of the plate and moving a finger so as to modify the drawing. For instance, by touching the vertex on the top right in the drawing of Figure 14 and dragging the finger it is possible to obtain a shift of the drawing from the configuration illustrated with a dashed line to the configuration illustrated with a solid line. The system may moreover envisage continuous display of the dimensions of each side of the plate, as the position of a vertex of the plate is modified, so as to enable very easily the operator to change the drawing until the desired shape and dimensions are obtained.

Figure 15 illustrates an example of a plate of marble that is to be used as a gravestone. In this case, the operation of detection is carried out as explained above in order to determine the shape and dimensions of the perimeter of the plate. The plate, or a template thereof, or a drawing thereof, is then marked with signs indicating the position of holes to be made in the plate to enable application of accessory panels and/or numbers or letters constituted by metal elements to be applied to the plate. The detection instrument 12 is then used for acquiring the position of these holes. In the case where the holes are adapted to receive connection pins forming part of the body of letters or numbers made of metal material, it may be envisaged to acquire marking of the positions of the holes by providing paint on the ends of the pins and resting the bodies of the letters on the plate in the desired positions so as to leave on the plate impressions indicating the positions of the holes that are to be formed in the plate. Also in this case, the detection instrument is then used for acquiring the positions of the impressions. For possible wordings in *bas-relief*, engraved in the plate, it may be envisaged that the portable computer is provided with a program adapted to select the desired font and its size, and the position of the wording on the plate.

Of course, without prejudice to the principle of the invention, the details of construction and the embodiments may vary widely with respect to what has been described and illustrated herein purely by way of example, without thereby departing from the scope of the present invention.

## Claims

1. A human-machine interface adapted to be associated to an apparatus for machining workpieces (L), including an operating head (8) movable with respect to a working surface (3), and an electronic control unit (E) programmable for moving the operating head (8) in such a way as to follow pre-determined paths, according to a pre-determined cycle, in order to machine a workpiece (L) positioned on the working surface (3),
said human-machine interface being **characterized in that** it includes:
- an instrument (12, 13; 15) for detecting information on the shape and dimensions of the piece to be machined and/or of the finished piece to be obtained; and
- an electronic processing unit (14) adapted to process the information at output from said detection instrument (12, 13; 15) and to transmit input data to said electronic control unit (E) of said apparatus, for automatic generation of a program for implementing the machining cycle.

2. The electronic-control apparatus for machining a workpiece, comprising:
- a supporting structure (2) defining a working surface (3) for receiving the workpiece (L) to be machined;
- an operating head (8) movable with respect to the working surface (3);
- one or more electric actuators (M1, M2, M3) for moving said operating head (8) with respect to the working surface;
- an electronic control unit (E), programmable for moving the operating head (8) in such a way as to follow pre-determined paths, according to a pre-determined cycle, in order to machine a workpiece (L) positioned on the working surface (3); and
- a human-machine interface (HMI) for programming the electronic control unit,
said apparatus being **characterized in that** said human-machine interface includes:
- an instrument (12, 13; 15) for detecting information on the shape and dimensions of the piece to be machined and/or of the finished piece to be obtained; and
- an electronic processing unit (14), adapted to process the information at output from said detection instrument (12, 13; 15) and to transmit input data to said electronic control unit (E) for automatic generation of a program for implementing the machining cycle.

3. The apparatus according to Claim 2, **characterized in that** said detection instrument comprises a detection tool (12) adapted for being used manually above the workpiece (L), or above a template (L') of the workpiece, or on a drawing of the workpiece.

4. The apparatus according to Claim 3, **characterized in that** said detection instrument comprises a feeler tool (12) that can be manually displaced along edges of the workpiece (L) or of a template (L') representing the workpiece (L), or along lines of a drawing of the workpiece, said feeler tool (12) being associated to a unit (13) for detecting the position of the tool (12), which is adapted to send to said electronic processing unit (14) an electrical signal containing information on the shape and dimensions of the workpiece (L) to be machined.

5. The apparatus according to Claim 2, **characterized in that** said detection instrument comprises an opto-electronic instrument (15) adapted to detect an image of the workpiece (L) or of a template (L') representing the workpiece, or of a drawing of the workpiece, and to send to said electronic processing unit (14) an electrical signal containing information on the shape and dimensions of the workpiece.

6. The apparatus according to Claim 2, **characterized in that** said human-machine interface (HMI) further comprises a terminal (T), which is in communication with said electronic processing unit (14), for displaying data obtained by the detection instrument (12, 13; 15), and is adapted for supplying to the electronic control unit (E) additional information on the operating cycle to be carried out.

7. The apparatus according to Claim 6, wherein the piece to be machined is a plate (L).

8. The apparatus according to Claim 7, **characterized in that** said additional information includes the desired cross-sectional profile for the edge of the finished plate (L), which can be selected, for one or more sides of the plate, or parts of said sides, from a plurality of predetermined profiles.

9. The apparatus according to Claim 7, **characterized in that** said additional information includes a shape selected for the area of transition (Z) between two contiguous sides of the plate.

10. The apparatus according to Claim 7, **characterized in that** said additional information includes a value of the thickness of material (S) to be removed along the perimeter of the plate (L).

11. The apparatus according to Claim 7, **characterized in that** said processing unit (14) is adapted for displaying on said terminal (T) a drawing of the plate (L) as detected by the detection instrument (12, 13; 15).

12. The apparatus according to Claim 7, **characterized in that** said additional information includes a correction of the information on the shape and dimensions of the plate, previously obtained by means of said detection instrument (12, 13; 15).

13. The apparatus according to Claim 7, **characterized in that** said correction includes a variation of scale in the case where the detection instrument is used on a template (L') that reproduces the plate (L) at a different scale.

14. The apparatus according to Claim 7, **characterized in that** said detection instrument is adapted for detecting a mark on the plate indicating the position of a hole to be made in the plate.

15. The apparatus according to Claim 6, **characterized in that** said terminal is a portable computer, for example of the palm-top or tablet type (T).

16. The apparatus according to Claim 15, **characterized in that** said portable computer (T) is adapted for displaying a drawing of the workpiece (L) as detected by the detection instrument (12, 13; 15) and is provided with a program for correcting the shape or dimensions of the drawing of the workpiece as displayed.

17. The apparatus according to Claim 16, **characterized in that** said portable computer (T) is configured for correcting the shape or dimensions of the drawing displayed thereon by means of a touch-screen.

18. The apparatus according to Claim 3, **characterized in that** means (17) are provided for displaying the path followed by said tool (12) directly on the workpiece (L) or on the template (L') of the workpiece during movement of the tool (12).

19. The apparatus according to any one of Claims 2-18, **characterized in that** said apparatus is configured in particular for machining plates of stone material, or plates of glass, or pieces of wooden material, by using cutting, and/or engraving, and/or machining tools, or tools of the water-jet type.

20. The apparatus according to Claim 19, comprising:
- two fixed side walls (5) set at the two sides of the working surface (3);
- an overhead travelling crane (6) guided above the two side walls (5) in a horizontal direction Y orthogonal to the horizontal direction X of the overhead travelling crane (6); and
- a carriage (7) movable in the aforesaid horizontal direction X along the overhead travelling crane (6),
- said operating head (8) being mounted movable on the carriage (7) in a vertical direction Z and being provided with a spindle that can be coupled to a machining tool and with the corresponding electric drive motor (M4),
- said electric actuators comprising electric motors (M1, M2, M3) for driving the overhead travelling crane (6), the carriage (7), and the operating head (8) along the three axes Y, X, Z, respectively.

21. The apparatus according to Claim 20, **characterized in that** said detection instrument (12, 13; 15) is adapted for being used with the workpiece (L), or a template of the workpiece (L'), or a drawing of the workpiece positioned on the working surface (3).

22. The apparatus according to Claim 20, **characterized in that** said detection instrument is adapted for being used on a workpiece (L), or a template of the workpiece (L'), or a drawing of the workpiece positioned on an auxiliary working surface (3'), set at a distance from the working surface (3) of the apparatus.

23. A method for machining workpieces (L) by means of an apparatus according to Claim 2, **characterized in that**:
- a workpiece (L), or a template (L') of the workpiece, or a drawing of the workpiece is positioned on the working surface (3) of the apparatus or on an auxiliary working surface (3') set at a distance therefrom;
- with the aid of the aforesaid detection instrument (12, 13; 15) information is obtained on the shape and dimensions of the workpiece (L) and/or on the position, shape, and dimensions of openings (A, A1, A2) to be formed in the workpiece and/or on the position of points (H), where holes are to be formed in the workpiece (L);
- with the aid of said electronic processing unit (14) the aforesaid information is used for transmitting input data to said electronic control unit (E) of the apparatus for automatic generation of a program for implementing the machining cycle; and
- the workpiece (L) is positioned on the working surface of the apparatus, or is kept on said working surface (3) in the case where the operation of detection has been carried out thereon, and a cycle of machining of the workpiece is carried out on the basis of said program.

24. The method according to Claim 23, **characterized in that** the workpiece is a plate (L) and **in that** a terminal (T) is provided, preferably in the form of a portable computer, for example of the palm-top or tablet type, and the information obtained by means of said detection instrument (12, 13; 15) is transferred to said terminal (T), and **in that** said terminal (T) is used for executing one or more of the following additional operations:
- selecting the desired cross-sectional profile for the edge of the finished plate, for each side of the plate (L), or for a portion thereof, by choosing from a plurality of predetermined profiles;
- selecting the desired shape for the area of transition between each pair of contiguous sides of the plate (L);
- selecting a value of thickness of material to be removed along the perimeter of the plate (L);
- correcting the information on the shape and dimensions of the plate (L), previously obtained by means of said detection instrument (12, 13; 15); and
- selecting a variation of scale in the case where the detection instrument is used on a template (L') that reproduces the plate at a different scale.
